# EUROPÄISCHE PATENTANMELDUNG

(11) **EP 4 645 846 A1**
(43) Veröffentlichungstag der Anmeldung: **05.11.2025**
(21) Anmeldenummer: 24173562.0
(22) Anmeldetag: 30.04.2024
(51) Int. Cl.: H04N 1/60

(54) **VERFAHREN UND VORRICHTUNG ZUM DRUCKEN EINES ZU DRUCKENDEN DEKORS**

(71) Anmelder: SWISS KRONO Tec AG, 6004 Luzern (CH)
(72) Erfinder: Dicke, Sebastian, 16868 Bantikow (DE)
(74) Vertreter: Gramm, Lins & Partner Patent- und Rechtsanwälte PartGmbB

(57) **Zusammenfassung**

Verfahren zum Drucken eines zu druckenden Dekors auf eine Mehrzahl von Druck-Oberflächen mittels einer digitalen Druckanlage, wobei das Verfahren die folgenden Schritte umfasst:
a) Bestimmen eines ersten Dekors als ein zu druckendes Dekor,
b) Bereitstellen einer digitalen Vorlage und von Referenz-Messdaten des zu druckenden Dekors,
c) Drucken des zu druckenden Dekors anhand der digitalen Vorlage auf eine Druck-Oberfläche mit Druckeinstellungen der digitalen Druckanlage,
d) Messen von Messgrößen des auf die Druck-Oberfläche gedruckten Dekors, so dass Druck-Messdaten erhalten werden,
e) Vergleichen der Druck-Messdaten mit den Referenz-Messdaten und Ermitteln eines Maßes einer Abweichung der Druck-Messdaten von den Referenz-Messdaten,
f) Ändern der Druckeinstellungen der digitalen Druckanlage, falls das Maß der Abweichung wenigstens ein vorbestimmtes Kriterium erfüllt,
g) Wiederholen der Schritte c) bis f), falls das Maß der Abweichung das wenigstens eine vorbestimmte Kriterium erfüllt.

## Beschreibung

Die vorliegende Erfindung betrifft ein Verfahren zum Drucken eines zu druckenden Dekors auf eine Mehrzahl von Druck-Oberflächen mittels einer digitalen Druckanlage sowie eine Vorrichtung zum Durchführen des Verfahrens.

Es ist seit langem bekannt, Oberflächen von Gegenständen, insbesondere von Papierbahnen, für verschiedene Zwecke mit einem Druckmotiv, dem sogenannten Dekor, zu bedrucken. Beispielsweise werden bedruckte Papierbahnen zur Herstellung von Paneelen oder Platten verwendet, die als Fußbodenbeläge, Wandverkleidungen, Deckenverkleidungen oder Möbelplatten Verwendung finden können. Dabei kann entweder das Dekor direkt auf die Holzwerkstoffplatten oder eine Grundierung auf der Platte aufgebracht werden oder das Dekor wird auf einen Dekorträger, beispielsweise ein Dekorpapier, aufgebracht, der später auf die Holzwerkstoffplatte aufgebracht, beispielsweise auflaminiert oder aufgeklebt wird. Insbesondere bei der Produktion von Fußbodenpaneelen ist es erwünscht und äußert vorteilhaft, wenn die mit dem Dekor bedruckten Druck-Oberflächen keine farblichen Abweichungen zueinander aufweisen, da zur Verwendung als Bodenbelag häufig Produkte unterschiedlicher Herstellungschargen miteinander verbunden und verlegt werden. Es muss daher sichergestellt werden, dass sich die Dekore der Paneele aus unterschiedlichen Chargen nicht voneinander unterscheiden. Dies gilt auch im Falle von Anschlusslieferungen, die beispielsweise erforderlich sein können, wenn ein defektes Paneel oder Produkt ausgetauscht werden muss.

Die US 2005/0259276 A1 zeigt ein Kalibrierverfahren für ein reprographisches System, bei dem ein bedrucktes Zielobjekt eingescannt wird und mit Zieldaten zwecks Bestimmung von Abweichungen verglichen wird. Anhand der Abweichungen wird eine Drucker-Kalibrierkurve erzeugt. Bei einem nachfolgenden Druck werden die Tonwerte in der digitalen Datei, die zum Drucken des Zielobjekts verwendet wird, entsprechend der Drucker-Kalibierkurve geändert.

Nachteilig ist hier, dass auch beim Drucken mit einer kalibrierten Druckanlage Abweichungen zwischen den gedruckten Dekoren und den gewünschten Dekoren bestehen. Häufig sind diese Abweichungen so groß, dass ein Korrekturverfahren erforderlich ist.

Ein solches ist beispielsweise aus der EP 3 961 166 A1 bekannt, die ein Verfahren zum Drucken eines Dekors zeigt, bei dem eine Abweichung eines gedruckten Dekors zu einem Referenz-Dekor bestimmt wird und abhängig von der Abweichung die digitale Druckvorlage geändert wird.

Nachteilig ist, dass die Anpassung der digitalen Druckvorlage einen enormen zeitlichen und personellen Aufwand erfordert. Die Anpassung der digitalen Druckvorlage erfolgt beispielsweise mittels eines Fotobearbeitungsprogrammes wie Photoshop oder einer Color-Management-Software und erfordert geschultes und kostenintensives Personal. Nach dem zeitaufwändigen Ändern der digitalen Druckvorlage sind verschiedene Kontrollschritte erforderlich, um menschliche und/oder technische Fehler beim Ändern der digitalen Druckvorlage aufzudecken und gegebenenfalls eine Korrektur vornehmen zu können, bevor es zu Fehlproduktionen mit einer fehlerhaften digitalen Druckvorlage kommt. Beispielsweise wird dabei überprüft, ob der Druck-Ausschnitt innerhalb der digitalen Druckvorlage korrekt ausgewählt ist, ob die Druckmaße richtig sind und/oder ob das Farbprofil richtig eingestellt ist.

Der Erfindung liegt daher die Aufgabe zugrunde, ein Verfahren sowie eine Vorrichtung dafür bereitzustellen, die die Nachteile beheben oder zumindest abmildern.

Die Erfindung löst die gestellt Aufgabe durch ein Verfahren zum Drucken eines zu druckenden Dekors auf eine Mehrzahl von Druck-Oberflächen mittels einer digitalen Druckanlage, wobei das Verfahren die folgenden Schritte umfasst:
a) Bestimmen eines ersten Dekors als ein zu druckendes Dekor,
b) Bereitstellen einer digitalen Vorlage und von Referenz-Messdaten des zu druckenden Dekors,
c) Drucken des zu druckenden Dekors anhand der digitalen Vorlage auf eine Druck-Oberfläche mit Druckeinstellungen der digitalen Druckanlage,
d) Messen von Messgrößen des auf die Druck-Oberfläche gedruckten Dekors, so dass Druck-Messdaten erhalten werden,
e) Vergleichen der Druck-Messdaten mit den Referenz-Messdaten und Ermitteln eines Maßes einer Abweichung der Druck-Messdaten von den Referenz-Messdaten,
f) Ändern der Druckeinstellungen der digitalen Druckanlage, falls das Maß der Abweichung wenigstens ein vorbestimmtes Kriterium erfüllt,
g) Wiederholen der Schritte c) bis f), falls das Maß der Abweichung das wenigstens eine vorbestimmte Kriterium erfüllt.

Bei dem erfindungsgemäßen Verfahren erfolgt der Vergleich des gedruckten Dekors mit dem zu druckenden Dekors anhand der verschiedenen Messdaten. Es werden die Druck-Messdaten mit den Referenz-Messdaten verglichen. Die Referenz-Messdaten entsprechen folglich den Daten, die an einem Dekor gemessen wurden oder würden, das als Referenz dienen kann, also exakt dem gewünschten Dekor entspricht.

Die digitale Vorlage entspricht vorzugsweise den Druck-Anweisungen für die digitale Druckanlage, aus denen sich für die digitale Druckanlage ergibt, welche Stelle der Druck-Oberfläche welchen Farbwert erhalten soll. Beispielsweise kann es sich bei der digitalen Vorlage um eine Bilddatei wie eine JPEG-Datei (Joint-Photographic-Experts-Group-Datei) oder eine tiff-Datei (Tagged Image File Format), oft auch kurz tif, oder eine Druckdatei wie eine PDF-Datei (Portable-Document-Format-Datei), eine PCL-Datei (Printer-Command-Language-Datei) oder eine PostScript-Datei handeln. Eine derartige Druckdatei kann auch aus einer Bilddatei wie einer JPEG-Datei oder aus anderen Arbeitsdokumenten generiert werden. Von der digitalen Vorlage zu unterscheiden sind die Druckeinstellungen der digitalen Druckanlage, die nicht Teil der digitalen Vorlage sind, sondern vorzugsweise auf einem Speicher in der digitalen Druckanlage gespeichert sind und insbesondere Informationen darüber enthalten, welche Menge welcher Tinte bei einem vorgegebenen Farbwert der digitalen Vorlage aufgebracht werden soll. Insbesondere bewirkt ein Ändern der Druckeinstellungen keine Anpassung der digitalen Vorlage, insbesondere der darin enthaltenen Farbwerte, und auch keine andere Vorverarbeitung der Druck-Anweisungen.

Wird im erfindungsgemäßen Verfahren beim Vergleichen der Druck-Messdaten mit den Referenz-Messdaten eine Abweichung festgestellt, die wenigstens ein vorbestimmtes Kriterium erfüllt, beispielsweise einen vorbestimmten Grenzwert für die Abweichung überschreitet, werden die Druckeinstellungen der digitalen Druckanlage geändert. Dadurch wird erreicht, dass bei einem mit den geänderten Druckeinstellungen gedruckten Dekor das Maß der Abweichung kleiner ist und somit das wenigstens eine vorbestimmte Kriterium gegebenenfalls nicht mehr erfüllt. Wird das wenigstens eine vorbestimmte Kriterium nicht erfüllt, entspricht das gedruckte Dekor qualitativ dem gewünschten Dekor. Wird das wenigstens eine vorbestimmte Kriterium hingegen erfüllt, ist eine Anpassung der Druckeinstellungen erforderlich, sodass davon ausgegangen werden kann, dass das gedruckte Dekor den Anforderungen an die Druckqualität nicht entspricht und als Ausschuss aussortiert werden muss.

Vorteilhaft an dem erfindungsgemäßen Verfahren ist, dass farbtreue Dekore hergestellt werden können, ohne dass eine Änderung der digitalen Vorlage erforderlich ist. Auf diese Weise werden insbesondere Kosten für die Bearbeitung der digitalen Vorlage sowie für die Kosten einer für die Bearbeitung erforderlichen Software eingespart. Zudem bleibt die digitale Vorlage vorzugsweise unverändert, so dass etwaige Kontrollschritte zum Überprüfen einer geänderten digitalen Vorlage entfallen.

Vorzugsweise sind die Druck-Messdaten und die Referenz-Messdaten ortsaufgelöst, so dass auch Schwankungen der Druckqualität auch dann festgestellt werden können, wenn sie auf räumlich kleiner Skala auftreten. Bevorzugt sind die Druck-Messdaten und die Referenz-Messdaten hyperspektral, so dass eine präzise Detektion von Abweichungen sichergestellt werden kann.

In einer vorteilhaften Ausgestaltung ist die digitale Druckanlage eine kalibrierte digitalen Druckanlage. Auf diese Weise kann die Genauigkeit der Druckanlage verbessert werden, sodass in einigen Ausgestaltungen weniger Iterationen der Verfahrensschritte c) bis f) erforderlich sind.

Vorzugsweise weist das Verfahren den folgenden Schritt auf: h) Drucken des zu druckenden Dekors anhand der digitalen Vorlage auf eine erste Anzahl an Druck-Oberflächen mit den Druckeinstellungen der digitalen Druckanlage. Die erste Anzahl ist vorzugsweise größer als eins, bevorzugt größer als 10, besonders bevorzugt größer als 100. Insbesondere erfolgt eine Massenproduktion des zu druckenden Dekors, sodass die Stückkosten für ein Dekor reduziert werden können und zugleich die Produktionskapazität erhöht wird.

Bevorzugt ist die digitale Vorlage im Schritt h) unverändert im Vergleich zum Schritt b), sodass insbesondere weitere Schritte zur Qualitätskontrolle der digitalen Vorlage entfallen.

Vorzugsweise weist das Verfahren folgende Schritte auf: i) Bestimmen eines zweiten Dekors als das zu druckende Dekor, j) Erneutes Durchführen der Schritte b) bis g). Insbesondere werden die Schritte b) bis g) jedes Mal erneut durchgeführt, wenn ein anderes Dekor als das zu druckende Dekor bestimmt wird, sodass sichergestellt werden kann, dass die Druckanlage das neue Dekor in der gewünschten Qualität druckt.

Nach dem Schritt j) erfolgt vorzugsweise folgender Schritt: k) Drucken des zu druckenden Dekors anhand der digitalen Vorlage auf eine zweite Anzahl an Druck-Oberflächen mit den Druckeinstellungen der digitalen Druckanlage. Die zweite Anzahl ist vorzugsweise größer als eins, bevorzugt größer als 10, besonders bevorzugt größer als 100.

Bevorzugt werden die Schritte b) bis g) erneut durchgeführt, wenn ein anderes Dekor als das zu druckende Dekor bestimmt wird. Die Parameter bei der Erstellung der Referenz-Messdaten können von Dekor zu Dekor leicht variieren oder schwanken, so dass bei einem Dekorwechsel in der Regel eine erneute Durchführung der Schritte b) bis g), also eine Korrektur der Druckeinstellungen, erforderlich ist, um ein Dekor zu erhalten, das dem gewünschten Dekor entspricht.

Vorzugsweise werden die Schritte c) bis g) erneut durchgeführt, wenn der Primer, die Druck-Oberfläche, beispielsweise der Holzwerkstoff und/oder die Drucktinte gewechselt wird. Insbesondere beim Wechsel dieser Elemente kann es zur Veränderung der Druckqualität kommen. Bei einem Primer handelt es sich insbesondere um eine Schicht, auf der die das jeweilige Dekor bildenden farbigen Druckpunkte aufgebracht werden. Diese Schicht kann auch als Grundierung bezeichnet werden. Die Schicht kann eine Grundfarbe aufweisen, beispielsweise weiß, um farbliche Unregelmäßigkeiten der Oberfläche des zu bedruckenden Werkstückes auszugleichen und für reproduzierbare und vorhersagbare Grundbedingungen für den Druck des Dekors zu sorgen. Alternativ oder zusätzlich dazu ist die Schicht als Farbaufnahmeschicht ausgebildet und verändert nicht oder nicht nur das optische Erscheinungsbild der Oberfläche, beispielsweise deren Farbe, sondern die Fähigkeit, die Farbe aufzunehmen. Bevorzugt werden die Schritte c) bis g) erneut durchgeführt, wenn sich die Temperatur der Luft und/oder der Drucktinte und/oder die Viskosität der Drucktinte im Vergleich zur vorherigen Durchführung des Verfahrens um mehr als einen vorbestimmten Wert geändert hat und/oder eine vorbestimmte Zeit, beispielsweise eine Woche oder ein Monat, seit der letzten Durchführung des Verfahrens verstrichen ist und/oder die digitale Druckanlage für eine vorbestimmte Zeit, beispielsweise für mehr als 12 Stunden, einen Tag oder eine Woche, stillstand, also nicht verwendet wurde.

Eine vorzugsweise Ausgestaltung zeichnet sich dadurch aus, dass die digitale Druckanlage wenigstens einen Druckkopf zum Drucken einer Basisfarbe aufweist und die Druckeinstellungen der digitalen Druckanlage wenigstens eine Druckintensität für den wenigstens einen Druckkopf aufweisen, wobei Schritt f) beinhaltet, dass wenigstens eine Druckintensität geändert wird, falls das Maß der Abweichung wenigstens ein vorbestimmtes Kriterium erfüllt. In dieser Ausgestaltung können Dekore besonders einfach farblich angepasst werden, indem die Druckintensität wenigstens eines Druckkopfes verändert wird, um den Anforderungen an ein gewünschtes Dekor zu genügen. Basisfarben sind insbesondere die Farben, die die Druckanlage unter Verwendung eines einzelnen Druckkopfes erzeugen kann. Beispielsweise sind die Basisfarben im CMYK-Farbmodell Cyan, Magenta, Gelb und Schwarz (CMYK). CYMK-Drucker haben dementsprechend einzelne Druckköpfe und/oder Tintenpatronen für jede dieser Basisfarben. Mischfarben sind hingegen solche Farben, die die Druckanlage nicht unter Verwendung eines einzelnen Druckkopfes, sondern nur durch das Mischen von Basisfarben in bestimmten Verhältnissen erzeugen kann. Beispielsweise kann im CMYK-Farbmodell durch das Mischen von Cyan und Magenta ein Farbton von Blau erzeugt werden. Unter Druckintensität wird insbesondere ein Maß dafür verstanden, wie viel Tinte der zugehörigen Basisfarbe ein Druckkopf bei einem bestimmten Anteil der Basisfarbe an dem vorgegebenen Farbwert der digitalen Vorlage in dem von der digitalen Druckanlage verwendeten Farbmodell aufbringt. Insbesondere erzeugt eine hohe Druckintensität eine kräftigere Darstellung der Basisfarbe des zugehörigen Druckkopfes, während eine niedrige Druckintensität eine blassere Darstellung der Basisfarbe des zugehörigen Druckkopfes bewirkt. Vorzugsweise beeinflusst die Druckintensität einen Durchflussparameter des zugehörigen Druckkopfes bei einem vorgegebenen Farbwert der digitalen Vorlage unmittelbar. Vorzugsweise ist jeder Druckkopf einer eigenen Basisfarbe zugeordnet, so dass beispielsweise in einer 4-Farb-CRYK-Papierdruckanlage je ein Druckkopf für die Farben Cyan, Rot, Gelb und Schwarz angeordnet ist.

Bevorzugt weist die digitale Vorlage Mischfarben auf. Vorzugsweise weist die digitale Vorlage zu mehr als 50%, bevorzugt mehr als 70%, besonders bevorzugt mehr als 90% Mischfarben auf. Auf diese Weise kann eine große Farbvielfalt mit natürlichen Farbwiedergaben erzeugt werden. Zudem ist lässt sich durch die Verwendung von Mischfarben die Druckqualität steigern, indem sanfte Übergänge zwischen verschiedenen Farben ermöglicht werden.

Vorzugsweise weist die digitale Druckanlage mehrere, bevorzugt mindestens drei, besonders bevorzugt mindestens vier Druckköpfe auf, sodass die Druckanlage durch Aufbringen der verschiedenen Basisfarben der Druckköpfe in verschiedenen Verhältnissen ein breites Farbspektrum abdecken kann. Die Druckeinstellungen umfassen dann vorzugsweise je eine Druckintensität für jeden Druckkopf. In einigen Ausgestaltungen ist es vorteilhaft, das erfindungsgemäße Verfahren oder zumindest die Schritte e) und f) für jeden Druckkopf einzeln durchzuführen, sodass vorzugsweise für jeden Druckkopf ein Maß der Abweichung der Druck-Messdaten von den Referenz-Messdaten ermittelt wird und die Druckeinstellungen, insbesondere die Druckintensität des jeweiligen Druckkopfes, geändert wird, falls das Maß der Abweichung wenigstens ein vorbestimmtes Kriterium erfüllt.

Vorzugsweise umfassen die Referenz-Messdaten und die Druck-Messdaten jeweils wenigstens eine Farbintensität und/oder wenigstens eine Luminanz. Bevorzugt ist die wenigstens eine Farbintensität und/oder die wenigstens eine Luminanz einer bestimmten Basisfarbe oder einer anderen Farbe zugeordnet. Unter einer Farbintensität wird insbesondere ein Maß für die Sättigung der jeweiligen Farbe verstanden. Unter einer Luminanz wird insbesondere ein Maß für die Helligkeit der jeweiligen Farbe verstanden. Bevorzugt werden anhand der wenigstens einen Farbintensität und/oder der wenigstens einen Luminanz ein Änderungsmaß für die Druckeinstellungen, insbesondere für die Druckintensität eines zugehörigen Druckkopfes, bestimmt und die Druckeinstellungen, insbesondere die Druckintensität des zugehörigen Druckkopfes, im Schritt f) anhand des Änderungsmaßes geändert. Bevorzugt umfassen die Referenz-Messdaten und die Druck-Messdaten jeweils wenigstens drei, besonders bevorzugt wenigstens vier Farbintensitäten und/oder Luminanzen, die vorzugsweise jeweils einer bestimmten Basisfarbe oder einer anderen Farbe zugeordnet sind. Vorzugsweise umfassen die Referenz-Messdaten und die Druck-Messdaten für jede Basisfarbe der Druckköpfe eine Farbintensität und/oder eine Luminanz.

Vorzugsweise umfasst das Bereitstellen der Referenz-Messdaten in Schritt b) folgende Schritte: b1) Bereitstellen einer digitalen Vorlage eines zu druckenden Dekors, b2) Drucken des zu druckenden Dekors anhand der digitalen Vorlage auf eine Referenzoberfläche, b3) Messen der Messgrößen des auf die Referenzoberfläche gedruckten Dekors, so dass die Referenz-Messdaten erhalten werden.

Die digitale Vorlage wird in bekannter Weise der digitalen Druckanlage bereitgestellt. Die Druckanlage druckt das zu druckende Dekor gemäß der digitalen Vorlage auf die Referenzoberfläche. Dabei entspricht die Referenzoberfläche vorzugsweise in Material, Größe, Haptik und/oder Farbe den im Laufe des Verfahrens zu bedruckenden Druck-Oberflächen. Das auf die Referenzoberfläche gedruckte Dekor wird dann vermessen, indem die Messgrößen gemessen werden, so dass Referenz-Messdaten erhalten werden. Je besser die Referenzoberfläche den Druck-Oberflächen entspricht, desto leichter und genauer können die Referenz-Messdaten mit den Druck-Messdaten verglichen werden. Wenn eine Abweichung zwischen Referenzoberfläche und Druck-Oberfläche bekannt ist, kann mithilfe eines Konvertierungstools eine Umrechnung erfolgen, sodass die verschiedenen Messdaten einander besser entsprechen.

Bevorzugt ist das wenigstens eine vorbestimmte Kriterium erfüllt, wenn eine Abweichung eines oder mehrerer der Druck-Messdaten von dazu korrespondierenden Referenz-Messdaten größer als ein für die entsprechende Messgröße vorbestimmter Grenzwert ist.

Vorzugsweise ist der vorbestimmte Grenzwert farb- und/oder ortsabhängig. Beispielsweise kann der vorbestimmte Grenzwert für eine Farbe, die bei dem zu druckenden Dekor leuchtend hervortritt oder besonders viel verwendet wird, um das Dekor zu drucken, besonders klein gewählt werden, so dass bereits relativ kleine Änderungen dazu führen, dass die Druckeinstellungen geändert werden.

Bevorzugt ist die Messgröße eine Farbintensität und/oder eine Luminanz und der vorbestimmte Grenzwert eine Abweichung von 10%, vorzugsweise 5%, besonders bevorzugt 2%. Beispielsweise kann dazu die Farbintensität und/oder die Luminanz gemäß dem HSV-Farbmodell (Hue-Saturation-Value-Farbmodell) bestimmt werden. Die Farbintensität als S-Wert in dem HSV-Farbmodell wird in der Regel auf einer Skala von 0 bis 100 gemessen, wobei 0 für eine vollständig graue Farbe (ungesättigt) steht und 100 für eine vollständig gesättigte Farbe, also die maximale Sättigung der Farbe in dem jeweiligen Farbmodell. Die Luminanz als V-Wert in dem HSV-Farbmodell wird in der Regel ebenfalls auf einer Skala von 0 bis 100 gemessen, wobei 0 für Schwarz und 100 für Weiß, also die maximale Helligkeit in dem jeweiligen Farbmodell.

Vorzugsweise wird die Messgröße, insbesondere die Farbintensität und/oder die Luminanz, für den bedruckten Bereich der Druck-Oberfläche gemittelt bestimmt. Alternativ dazu wird die Messgröße für mehrere Teilbereiche oder für mehrere Punkte des bedruckten Bereichs der Druck-Oberfläche einzeln ermittelt. Die einzelnen Werte können dann beispielsweise mit einer vorbestimmten Gewichtung gemittelt werden. Beispielsweise können Randbereiche und/oder Randpunkte des Dekors und/oder der Druck-Oberfläche weniger stark gewichtet werden als mittige Bereiche und/oder mittig angeordnete Punkte. Die Teilbereiche und/oder Punkte des bedruckten Bereichs der Druck-Oberfläche können beispielsweise in einem Raster angeordnet sein und/oder ein solches bilden.

Vorzugsweise werden die Referenz-Messdaten, die Druck-Messdaten, die Änderungen der Druckeinstellungen und/oder die ermittelten Maße der Abweichung gespeichert und bevorzugt in einem elektronischen Datenspeicher hinterlegt. In einer bevorzugten Ausgestaltung des erfindungsgemäßen Verfahrens werden die Druck-Messdaten, die Referenz-Messdaten, die Änderungen der Druckeinstellungen und/oder die ermittelten Maße der Abweichung verschiedener Druckaufträge, also beispielsweise für verschiedene vorherige zu druckende Dekore, als Trainingsdaten zum Trainieren eines Künstliche-Intelligenz-(KI-)Modells verwendet. Vorzugsweise wird mittels des KI-Modells anhand der Druck-Messdaten und der Referenz-Messdaten des zu druckenden Dekors ein Änderungsmaß zum Ändern der Druckeinstellungen bestimmt. Beispielsweise legt das KI-Modell anhand der Messdaten fest, um welchen Wert die Druckintensität eines bestimmten Druckkopfes vergrößert oder verkleinert werden muss, um das wenigstens eine vorbestimmte Kriterium zu erfüllen oder zumindest eine Verbesserung der Druckqualität und/oder der Farbtreue zu erzielen. Bei der Korrektur der Druckqualität handelt es sich häufig um einen iterativen Prozess. Mithilfe des KI-modells lässt sich in einigen Ausgestaltungen die Anzahl der erforderlichen Iterationen, um das wenigstens eine vorbestimmte Kriterium zu erfüllen, reduzieren, indem beispielsweise eine Über- und/oder Unter-Regelung der Druckeinstellungen vermieden oder zumindest vermindert wird.

Bevorzugt betreffen die Druck-Messdaten die gleichen Stellen und/oder den gleichen Bereich des Dekors wie die Referenz-Messdaten. Auf diese Weise wird eine Vergleichbarkeit der Messdaten gewährleistet. Besonders bevorzugt betreffen die Druck-Messdaten und die Referenz-Messdaten das gesamte Dekor. Dies bedeutet insbesondere, dass eine Vielzahl von Messpunkten vorhanden ist, an denen die jeweiligen Messdaten ermittelt werden und diese Vielzahl von Messpunkten sich über das gesamte Dekor erstrecken. Vorzugsweise sind die Messpunkte äquidistant über das Dekor verteilt.

Gemäß einem zweiten Aspekt löst die Erfindung die gestellte Aufgabe durch eine Vorrichtung zum Durchführen des erfindungsgemäßen Verfahrens. Bevorzugt weist die Vorrichtung wenigstens einen Sensor, der eingerichtet ist zum Messen von Messgrößen des auf die Druck-Oberfläche gedruckten Dekors, so dass Druck-Messdaten erhalten werden. Vorzugsweise umfasst die Vorrichtung eine elektronische Datenverarbeitungseinrichtung, auf der vorzugsweise Referenz-Messdaten hinterlegt sind. Vorzugsweise weist die Vorrichtung ein Vergleichsmodul auf, das eingerichtet ist zum Vergleichen der Druck-Messdaten mit den Referenz-Messdaten und Ermitteln eines Maßes einer Abweichung der Druck-Messdaten von den Referenz-Messdaten. Die elektronische Datenverarbeitungseinrichtung ist bevorzugt eingerichtet zum Ändern der Druckeinstellungen der digitalen Druckanlage, falls das Maß der Abweichung wenigstens ein vorbestimmtes Kriterium erfüllt. Die Vorrichtung weist vorzugsweise einen Speicher auf, auf dem die Druckeinstellungen hinterlegt sind. Vorzugsweise weist die Vorrichtung wenigstens einen, bevorzugt wenigstens drei, besonders bevorzugt vier Druckköpfe zum Drucken einer Basisfarbe auf. Bevorzugt weist die Vorrichtung eine Transporteinrichtung zum Zuführen und Abführen von Druck-Oberflächen auf.

### Ausführungsbeispiel 1 - Dekor Eiche

Auf einer 4-Farb-CRYK-Papierdigitaldruckanlage mit einer Druckbreite von 210 cm werden bei einem Holzwerkstoffhersteller Holz-, Stein- und Fantasiedekore gedruckt. Eine CRYK-Druckanlage weist die Basisfarben cyan, rot, gelb, schwarz auf. Um die farbliche Wiederholbarkeit der folgenden Produktionen zu überwachen, werden vor der Erstproduktion eines Dekors Referenz-Messdaten eines Referenzmusters digital und physisch gespeichert und/oder archiviert. Bei allen folgenden Produktionen werden im Vorfeld Vergleichsmuster angedruckt und farblich vermessen, so dass Druck-Messdaten erhalten werden. Die Druck-Messdaten werden mit den Referenz-Messdaten verglichen. Die Toleranz der Abweichung wird auf 5% festgelegt. Bei der dritten Produktion des Dekors Eiche wird eine Abweichung von 9% festgestellt, da das Dekor zu Gelb ist. Die Messdaten und/oder die Abweichung werden an die elektronische Datenverarbeitungseinrichtung der Druckanlage weitergeleitet, die wiederum die Druckeinstellungen so ändert, dass die gelben Druckköpfe so eingestellt werden, dass diese etwas blasser drucken. Der zweite Andruck des Vergleichsmusters ergibt eine Abweichung von 4%. Das Dekor ist folglich farblich innerhalb der Toleranz zum Referenzmuster eingestellt und kann produziert werden.

### Ausführungsbeispiel 2 - Dekor Buche

Auf einer 4-Farb-CRYK-Papierdigitaldruckanlage mit einer Druckbreite von 210 cm werden bei einem Holzwerkstoffhersteller Holz-, Stein- und Fantasiedekore gedruckt. Um die farbliche Wiederholbarkeit der folgenden Produktionen zu überwachen, werden vor der Erstproduktion eines Dekors Referenz-Messdaten eines Referenzmusters digital und physisch gespeichert und/oder archiviert. Bei allen folgenden Produktionen werden im Vorfeld Vergleichsmuster angedruckt und farblich vermessen, so dass Druck-Messdaten erhalten werden. Die Druck-Messdaten werden mit den Referenz-Messdaten verglichen. Die Toleranz ist hier so gewählt, dass sichtbare Abweichungen durch die Einschätzung eines Produktionsmitarbeiters oder einen Produktionsleiter festgelegt werden. Bei der fünften Produktion des Dekors Buche wird das Vergleichsmuster angedruckt und eine Reihenverpressung mit dem Referenzmuster hergestellt, sodass links ein Vergleichsmuster, mittig das Referenzmuster und rechts ein Vergleichsmuster angeordnet sind. Das Dekor ist deutlich zu dunkel. In der Eingabemaske der Druckanlage werden die schwarzen Druckköpfe so eingestellt, dass diese etwas schwächer/blasser drucken. Der zweite Andruck des Vergleichsmuster ergibt ein zufriedenstellendes Ergebnis mit einer Abweichung von 4%. Das Dekor ist farblich innerhalb der Toleranz zum Referenzmuster eingestellt und kann produziert werden.

### Ausführungsbeispiel 3 - Dekor Walnuss

Auf einer 4-Farb-CRYK-Papierdigitaldruckanlage mit einer Druckbreite von 210 cm werden bei einem Holzwerkstoffhersteller Holz-, Stein- und Fantasiedekore gedruckt. Um die farbliche Wiederholbarkeit der folgenden Produktionen zu überwachen, werden vor der Erstproduktion eines Dekors Referenz-Messdaten eines Referenzmusters digital und physisch gespeichert und/oder archiviert. Bei allen folgenden Produktionen werden im Vorfeld Vergleichsmuster angedruckt und farblich vermessen, so dass Druck-Messdaten erhalten werden. Die Druck-Messdaten werden mit den Referenz-Messdaten verglichen. Die Toleranz der Abweichung wurde auf 5% festgelegt und zudem entscheidet der Produktionsleiter am Ende durch visuelle Einschätzung, ob eine Korrektur der Druckeinstellungen erforderlich ist. Bei der zweiten Produktion von Dekor Walnuss wird eine Abweichung von 10% festgestellt, das Dekor ist zu hell/blass. Die Messdaten und/oder die Abweichung werden an die elektronische Datenverarbeitungseinrichtung der Druckanlage weitergeleitet, die wiederum die Druckeinstellungen so ändert, dass die gelben Druckköpfe so eingestellt werden, dass diese etwas stärker drucken. Anschließend wird mit den geänderten Druckeinstellungen ein neues Vergleichsmuster angedruckt und erneut vermessen. Die Abweichung beträgt nun 5%. Außerdem wird eine Reihenverpressung mit dem Referenzmuster hergestellt, sodass links ein Vergleichsmuster, mittig das Referenzmuster und rechts ein Vergleichsmuster angeordnet sind. Das Dekor wird durch den Produktionsleiter bewertet und muss noch einmal etwas stärker eingestellt werden. In der Eingabemaske der Druckanlage werden die schwarzen Druckköpfe so eingestellt, dass diese etwas stärker drucken. Der erneute Andruck eines Vergleichsmuster mit den geänderten Druckeinstellungen ergibt ein zufriedenstellendes Ergebnis. Das Dekor ist farblich innerhalb der Toleranz zum Referenzmuster eingestellt und kann produziert werden.

### Ausführungsbeispiel 4 - Dekor Kirsche

Auf einer 4-Farb-CRYK-Papierdigitaldruckanlage mit einer Druckbreite von 210 cm werden bei einem Holzwerkstoffhersteller Holz-, Stein- und Fantasiedekore gedruckt. Um die farbliche Wiederholbarkeit der folgenden Produktionen zu überwachen, werden vor der Erstproduktion eines Dekors Referenz-Messdaten eines Referenzmusters digital und physisch gespeichert und/oder archiviert. Bei allen folgenden Produktionen werden im Vorfeld Vergleichsmuster angedruckt und farblich vermessen, so dass Druck-Messdaten erhalten werden. Die Druck-Messdaten werden mit den Referenz-Messdaten verglichen. Die Toleranz der Abweichung wurde auf 5% festgelegt. Bei der dritten Produktion von Dekor Kirsche wird eine Abweichung von 16% festgestellt - das Dekor ist zu rot. Die Messdaten und/oder die Abweichung werden an die elektronische Datenverarbeitungseinrichtung der Druckanlage weitergeleitet, die wiederum mithilfe eines KI-Modells die Druckeinstellungen so ändert, dass die roten Druckköpfe so eingestellt werden, dass diese etwas schwächer drucken. Das KI-Modell verwendet dafür die Erfahrungen aus anderen Produktionen mit ähnlichen Dekoren. Der zweite Andruck des Vergleichsmusters ergibt eine Abweichung von 2%. Das Dekor ist farblich innerhalb der Toleranz zum Referenzmuster eingestellt und kann produziert werden.

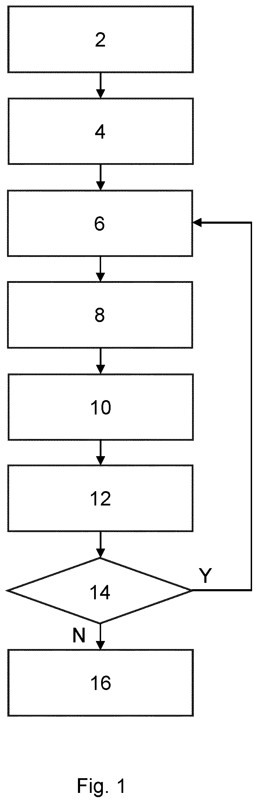

Mithilfe der beiliegenden Zeichnung wird nachfolgend ein Ausführungsbeispiel der vorliegenden Erfindung näher erläutert. Es zeigt
- Figur 1 -: die schematische Darstellung eines Ablaufes eines Verfahrens gemäß einem ersten Ausführungsbeispiel der vorliegenden Erfindung.

Figur 1 zeigt schematisch den Ablauf eines Verfahrens gemäß einem ersten Ausführungsbeispiel der vorliegenden Erfindung. Zunächst wird in einem ersten Schritt 2 ein erstes Dekor als ein durch die digitale Druckanlage zu druckendes Dekor bestimmt. Im zweiten Schritt 4 werden eine digitale Vorlage sowie Referenz-Messdaten des zu druckenden Dekors bereitgestellt. Die digitale Vorlage enthält beispielsweise Druck-Anweisungen für die digitale Druckanlage darüber, welche Stelle der Druck-Oberfläche welchen Farbwert erhalten soll.

Im dritten Schritt 6 wird das zu druckende Dekor anhand der digitalen Vorlage auf eine Druck-Oberfläche unter Verwendung von Druckeinstellungen der digitalen Druckanlage gedruckt. Die digitale Vorlage enthält dazu beispielsweise Druck-Anweisungen für die digitale Druckanlage darüber, welche Stelle der Druck-Oberfläche welchen Farbwert erhalten soll. Die digitale Vorlage kann beispielsweise in Gestalt einer Druckdatei, wie beispielsweise einer PDF-Datei oder einer PCL-Datei vorliegen. Die Druckeinstellungen der digitalen Druckanlage sind hingegen nicht Teil der digitalen Vorlage und sind beispielsweise auf einem Speicher in der digitalen Druckanlage gespeichert und enthalten beispielsweise Informationen darüber, welche Menge welcher Tinte bei einem vorgegebenen Farbwert der digitalen Vorlage auf die Druck-Oberfläche aufgebracht werden soll. Ein Ändern der Druckeinstellungen bewirkt insbesondere keine Anpassung der digitalen Vorlage und auch keine andere Vorverarbeitung der Druck-Anweisungen.

Im vierten Schritt 8 erfolgt das Messen von Messgrößen des auf die Druck-Oberfläche gedruckten Dekors, so dass Druck-Messdaten erhalten werden. Beispielsweise weist die Druckanlage dazu Sensoren zum Vermessen des Dekors auf. Das Messen erfolgt vorzugsweise ortsaufgelöst und hyperspektral.

In einem fünften Schritt 10 werden die Druck-Messdaten mit den Referenz-Messdaten verglichen. Zudem wird auf der Grundlage dieses Vergleichs ein Maß einer Abweichung der Druck-Messdaten von den Referenz-Messdaten bestimmt. Erfüllt das Maß wenigstens ein vorbestimmtes Kriterium, beispielsweise wenn ein Grenzwert für eine maximale farbliche Abweichung zwischen den Druck-Messdaten und den Referenz-Messdaten überschritten ist, so werden in einem sechsten Schritt 12 die Druckeinstellungen der digitalen Druckanlage geändert. Beispielsweise können die Druckeinstellungen so geändert werden, dass ein Druckkopf oder mehrere Druckköpfe der digitalen Druckanlage für eine bestimmte Basisfarbe bei einem vorbestimmten Farbwert der digitalen Vorlage stärker oder schwächer drucken, um die Abweichungen zwischen den Druck-Messdaten und den Referenz-Messdaten zu minimieren. Im siebten Schritt 14 wird festgestellt, ob das Maß der Abweichung das wenigstens eine vorbestimmte Kriterium erfüllt hat, und falls dies der Fall (Y) ist beginnt das Korrekturverfahren ab dem dritten Schritt 6 erneut zu laufen. Andernfalls (N) ist das Korrekturverfahren abgeschlossen, das gedruckte Dekor liegt dann beispielsweise innerhalb einer vorgegebenen Toleranz zu den Referenz-Messdaten, und es kann in einem optionalen achten Schritt 16 eine Massenproduktion des zu druckenden Dekors auf eine Mehrzahl von Druck-Oberflächen erfolgen.

## Patentansprüche

1. Verfahren zum Drucken eines zu druckenden Dekors auf eine Mehrzahl von Druck-Oberflächen mittels einer digitalen Druckanlage, wobei das Verfahren die folgenden Schritte umfasst:
a) Bestimmen eines ersten Dekors als ein zu druckendes Dekor,
b) Bereitstellen einer digitalen Vorlage und von Referenz-Messdaten des zu druckenden Dekors,
c) Drucken des zu druckenden Dekors anhand der digitalen Vorlage auf eine Druck-Oberfläche mit Druckeinstellungen der digitalen Druckanlage,
d) Messen von Messgrößen des auf die Druck-Oberfläche gedruckten Dekors, so dass Druck-Messdaten erhalten werden,
e) Vergleichen der Druck-Messdaten mit den Referenz-Messdaten und Ermitteln eines Maßes einer Abweichung der Druck-Messdaten von den Referenz-Messdaten,
f) Ändern der Druckeinstellungen der digitalen Druckanlage, falls das Maß der Abweichung wenigstens ein vorbestimmtes Kriterium erfüllt,
g) Wiederholen der Schritte c) bis f), falls das Maß der Abweichung das wenigstens eine vorbestimmte Kriterium erfüllt.

2. Verfahren nach Anspruch 1, **gekennzeichnet durch** folgenden Schritt:
h) Drucken des zu druckenden Dekors anhand der digitalen Vorlage auf eine erste Anzahl an Druck-Oberflächen mit den Druckeinstellungen der digitalen Druckanlage.

3. Verfahren nach einem der vorstehenden Ansprüche, **gekennzeichnet durch** folgende Schritte:
i) Bestimmen eines zweiten Dekors als das zu druckende Dekor,
j) Erneutes Durchführen der Schritte b) bis g).

4. Verfahren nach Anspruch 3, **gekennzeichnet durch** folgenden Schritt:
k) Drucken des zu druckenden Dekors anhand der digitalen Vorlage auf eine zweite Anzahl an Druck-Oberflächen mit den Druckeinstellungen der digitalen Druckanlage.

5. Verfahren nach einem der vorstehenden Ansprüche, **dadurch gekennzeichnet, dass** die digitale Druckanlage wenigstens einen Druckkopf zum Drucken einer Basisfarbe aufweist und die Druckeinstellungen der digitalen Druckanlage wenigstens eine Druckintensität für den wenigstens einen Druckkopf aufweisen, wobei Schritt f) umfasst, dass wenigstens eine Druckintensität geändert wird, falls das Maß der Abweichung wenigstens ein vorbestimmtes Kriterium erfüllt.

6. Verfahren nach einem der vorstehenden Ansprüche, **dadurch gekennzeichnet, dass** die Druckintensität einen Durchflussparameter des zugehörigen Druckkopfes bei einem vorgegebenen Farbwert der digitalen Vorlage unmittelbar beeinflusst.

7. Verfahren nach einem der vorstehenden Ansprüche, **dadurch gekennzeichnet, dass** die Referenz-Messdaten und die Druck-Messdaten jeweils wenigstens eine Farbintensität und/oder wenigstens eine Luminanz umfassen.

8. Verfahren nach einem der vorstehenden Ansprüche, **dadurch gekennzeichnet, dass** das Bereitstellen der Referenz-Messdaten in Schritt b) folgende Schritte beinhaltet:
b1) Bereitstellen einer digitalen Vorlage eines zu druckenden Dekors,
b2) Drucken des zu druckenden Dekors anhand der digitalen Vorlage auf eine Referenzoberfläche,
b3) Messen der Messgrößen des auf die Referenzoberfläche gedruckten Dekors, so dass die Referenz-Messdaten erhalten werden.

9. Verfahren nach einem der vorstehenden Ansprüche, **dadurch gekennzeichnet, dass** das wenigstens eine vorbestimmte Kriterium erfüllt ist, wenn eine Abweichung eines oder mehrerer der Druck-Messdaten von dazu korrespondierenden Referenz-Messdaten größer als ein für die entsprechende Messgröße vorbestimmter Grenzwert ist.

10. Verfahren nach Anspruch 9, **dadurch gekennzeichnet, dass** der vorbestimmte Grenzwert farb- und/oder ortsabhängig ist.

11. Verfahren nach Anspruch 9 oder 10, **dadurch gekennzeichnet, dass** die Messgröße eine Farbintensität und/oder eine Luminanz ist und der vorbestimmte Grenzwert eine Abweichung von 10%, vorzugsweise 5%, besonders bevorzugt 2% ist.

12. Verfahren nach einem der vorstehenden Ansprüche, **dadurch gekennzeichnet, dass** Änderungen der Druckeinstellungen und/oder die ermittelten Maße der Abweichung gespeichert werden.

13. Verfahren nach einem der vorstehenden Ansprüche, **dadurch gekennzeichnet, dass** die Druck-Messdaten die gleichen Stellen und/oder den gleichen Bereich des Dekors betreffen wie die Referenz-Messdaten.

14. Verfahren nach Anspruch 13, **dadurch gekennzeichnet, dass** die Druck-Messdaten und die Referenz-Messdaten das ganze Dekor betreffen.

15. Vorrichtung zum Durchführen eines Verfahrens nach einem der vorstehenden Ansprüche.
